# EUROPEAN PATENT APPLICATION

(11) **EP 3 439 238 A1**
(43) Date of publication of application: **06.02.2019**
(21) Application number: 17773216.1
(22) Date of filing: 28.03.2017
(51) Int. Cl.: H04L 12/24, H04L 29/12

(54) **ARCHITECTURE, METHOD AND APPARATUS FOR REALIZING NETWORK FUNCTION COMMUNICATION**

(30) Priority: 01.04.2016 CN 201610204656
(71) Applicant: ZTE Corporation, Shenzhen, Guangdong 518057 (CN)
(72) Inventor: ZHU, Jinguo, Shenzhen Guangdong 518057 (CN); CHEN, Li, Shenzhen Guangdong 518057 (CN); LI, Ning, Shenzhen Guangdong 518057 (CN)
(74) Representative: Aipex B.V.
(86) International application number: PCT/CN2017/078453
(87) International publication number: WO 2017/167186

(57) **Abstract**

Provided are an architecture, method and apparatus for realizing communication between network functions, including: an interface function registering with an interface function management module after being instantiated, so that the interface function management module stores information corresponding to the interface function; and network functions in a same communication domain directly interworking with each other to realize communication, and the network function establishing communication with the network function in another communication domain via the interface function. An interworking interface between the network function and a selected interface function which is in the same communication domain with the network function is identical to an interworking interface between the network function and a destination network function which is in the same communication domain with the network function. With the architecture for realizing communication between network functions provided by the embodiments, the network function and the interface function are decoupled. The network function can realize the interworking with the network function inside the communication domain as well as the interworking with a destination network function outside the communication domain by only one type of interworking interface, so that the logic of the network functions becomes simple, thereby simplifying the design of the network functions and greatly reducing the development and deployment difficulties of the network functions.

## Description

### TECHNICAL FIELD

Embodiments of the present invention relate to mobile communication technologies and, in particular, to an architecture, method and apparatus for realizing communication between network functions.

### BACKGROUND

Traditional mobile communication is communication among people, and a system architecture thereof is used in all communication scenarios. However, this system architecture is not flexible enough. In the research on the next generation communication, new service scenarios such as communication between people and things as well as communication between things and things need to be supported. The new communication scenarios need different system architectures. That is, the traditional single system architecture can no longer meet the development demands of communication technologies.

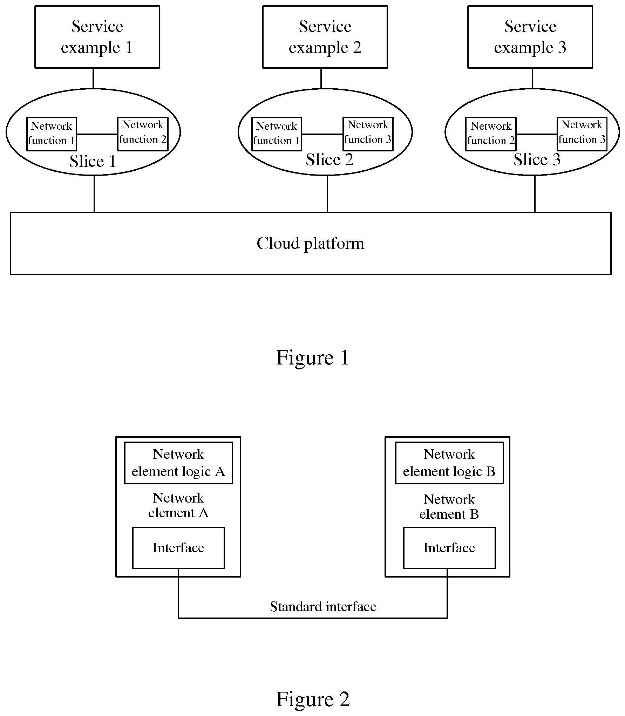

A network slice is an important technical means to support multiple logical networks on a physical network. The network slice is a set of a group of network functions. These network functions have specific behaviors and interwork with each other via interfaces so as to provide a communication service or network capability. FIG. 1 is a schematic diagram of the network slices in the related art. As shown in FIG. 1, three network slices are provided for respectively meeting three different service demands. All network slices are operated on a cloud platform. The network functions of the network slices may be different. The cloud platform is a hardware and software platform realized by a Network Function Virtualization (NFV) technology and a Software Define Network (SDN) technology, and can realize dynamic creation, maintenance and physical resource sharing of the logic function.

Two problems need to be solved in order to realize the network functions in the network slices.

One problem is that the communication mechanism between network elements in a traditional network generally adopts a static configuration link or a query mode of a relatively static Domain Name System (DNS), while the network functions operated on the cloud platform are virtualized network functions. Compared with traditional network elements, the creation and deletion of the network functions operated on the cloud platform are extremely frequent. Therefore, it is hard for the traditional static configuration and DNS to solve the communication problem between the virtualized network functions.

Another problem is that the network functions within the network slices need to interwork with the traditional network. Therefore, the network functions need to deal with complex interfaces of the traditional network, which makes the network functions become very complicate and difficult to be developed and deployed quickly.

### SUMMARY

The following is a summary of the subject matter described in detail in the present invention. This summary is not intended to limit the scope of the claims.

In view of this, embodiments of the present invention provide an architecture, method and apparatus for realizing communication between network functions, which can simplify the design of network functions and greatly reduce the development and deployment difficulties of the network functions.

An architecture for realizing communication between network functions is provided in the embodiments of the present invention. In each communication domain, the architecture at least includes one or more network functions, one or more interface functions and an interface function management module.

The network function is configured to handle its own information processing and perform information interactions of other network functions.

The interface functions is configured to provide interworking with a different communication domain.

The interface function management module is configured to accept a registration from the interface function, and store information corresponding to the interface function initiating a registration request.

An interworking interface between the network function and a selected interface function which is in the same communication domain with the network function is identical to an interworking interface between the network function and a destination network function which is in the same communication domain with the network function.

Optionally, the interface function supports a traditional network interface, and is further configured to handle the interworking with a traditional network.

Optionally, each interface function supports one or more type interworking interfaces.

Optionally, the interface functions in a same communication domain are deployed together, or are configured independently and separately.

A method for realizing communication between network functions is further provided in the embodiments of the present invention. The method includes: an interface function registering with an interface function management module after being instantiated, so that the interface function management module stores information corresponding to the interface function; and
directly interworking with each other, by network functions in a same communication domain, to realize communication, and establishing, by the network function, communication with the network function in another communication domain via the interface function.

An interworking interface between the network function and a selected interface function which is in the same communication domain with the network function is identical to an interworking interface between the network function and a destination network function which is in the same communication domain with the network function
Optionally, the interface function supports a traditional interface. The method further includes steps described below.

The network function establishes communication with a traditional network element via the interface function.

Optionally, the interface functions in the same communication domain support one or more interworking interfaces.

Optionally, after the registration of the interface function is completed, the interface function further includes the step described below.

The network function binds, according to its own processing capability, itself to a corresponding interface function. The interface function stores information of the network function realizing bound to the interface function itself.

Optionally, the step in which the network functions in the same communication domain directly interwork with each other to realize communication includes the steps described below.

The network function needs to establish a session and initiates a session establishment request to the interface function bound to the network function itself.

The interface function bound to the network function looks up, according to the received session establishment request and through a Domain Name System (DNS), a destination interface function corresponding to a destination network function corresponding to the session that needs to be established, and sends the session establishment request to the destination network function via the found destination interface function.

The network function initiating the session establishment request receives a session establishment response returned by the destination network function via the destination interface function and the interface function, or receives the session establishment response returned by the destination network function, and establishes a direct interworking with the destination network function.

Optionally, the step in which the network function establishes communication with the network function in another communication domain or a traditional network element via an interface function includes the steps described below.

The network function needs to establish a session and initiates the session establishment request to the interface function bound to the network function itself.

The interface function bound to the network function itself looks up, according to the received session establishment request and through the DNS, the destination interface function corresponding to the destination network function in another communication domain or a traditional network element, and sends the session establishment request to the destination network function via the found destination interface function or directly sends the session establishment request to the traditional network element.

The network function receives the session establishment response returned by the destination network function via the destination interface function and the interface function bound to the network function, or receives the session establishment response returned by the traditional network element via the interface function bound to the network function.

An apparatus for realizing communication between network functions is further provided by the present invention. The apparatus includes a first registration module and a first binding module and a first processing module.

The first registration module is configured to request an interface function management module for registering information of the first registration module itself with the interface function management module so that the interface function management module stores the information of the first registration module.

The first binding module is configured to receive a binding request from the network function, and store information of the network function initiating the binding request to realize a binding to the network function.

The first processing module is configured to look up, according to a received session establishment request from the network function and through a DNS, a destination interface function or a destination traditional network element corresponding to a session that needs to be established, and send the session establishment request to a corresponding destination network function via the found destination interface function or directly send the session establishment request to the destination traditional network element.

Optionally, the first registration module is further configured to receive a registration response from the interface function management module.

Optionally, the first binding module is further configured to return a binding response to the network function initiating the binding request.

Optionally, the first processing module is further configured to receive a session establishment response returned by the destination network function via the destination interface function, or receive the session establishment response returned by the destination network function, or receive the session establishment response returned by the traditional network element.

Optionally, the first processing module is further configured to receive the session establishment request of the interface function bound to the network function initiating the session establishment request, select a suitable destination network function and send the session establishment request to the selected destination network function.

Optionally, the first processing module is further configured to realize a load sharing of a plurality of network functions according to load of the plurality of network functions when selecting the suitable network function.

Optionally, the first processing module is further configured to make the session establishment request sent to the selected destination network function carry address information of the network function initiating the session establishment request.

Optionally, the apparatus is disposed in the interface function.

An apparatus for realizing communication between network functions is further provided by the present invention. The apparatus includes a second binding module and a second processing module.

The second binding module is configured to request an interface function management module, according to a protocol supported by the apparatus itself, to discover an interface function, and obtain an available interface function; and initiate a binding request to the obtained interface function to realize the binding to the interface function.

The second processing module is configured to initiate a session establishment request to an interface function bound to the apparatus when a session needs to be established, receive a session establishment response from the interface function bound to the apparatus, or the session establishment response from the selected network function.

Optionally, the second binding module is further configured to receive a binding response from the interface function.

Optionally, the apparatus is disposed in the network function.

An apparatus for realizing communication between network functions is further provided by the present invention. The apparatus includes a second registration module and a third binding module and a storage module.

The second registration module is configured to receive a registration request from an interface function, and save information corresponding to the interface function initiating the registration request into the storage module.

The third binding module is configured to receive an interface function discovery request from the network function, and search, according to an interface function type carried in the interface function discovery request, for an available interface function, and return the available interface function to the network function initiating the interface function discovery request.

The storage module is configured to store information corresponding to the interface function initiating the registration request.

Optionally, the second registration module is further configured to return a registration response to the interface function initiating the registration request.

Optionally, the apparatus is disposed in an interface function management module.

Embodiments of the present invention further provide a computer-readable storage medium, which is configured to store computer-executable instructions for executing any method for realizing network function communication described above.

Compared with the existing art, the present invention is as follows. An interface function is bound to an interface function management module after being instantiated, so that the interface function management module stores information corresponding to the interface function. Network functions in the same communication domain directly interwork with each other to realize communication, and the network function establishes communication with the network function in another communication domain via the interface function. In the same communication domain, an interworking interface adopted between the network function and a selected interface function is identical to an interworking interface adopted between the network function and a destination network function in the communication domain. With the architecture for realizing communication between network functions provided by the embodiment of the present invention, the decoupling of the network function and the interface function is realized. The network function can realize the interworking with the network function inside the communication domain as well as the interworking with a destination network function outside the communication domain by only one type of interworking interface, so that the logic of the network functions becomes simple, thereby simplifying the design of the network functions and greatly reducing the development and deployment difficulties of the network functions.

Other aspects can be understood after the drawings and detailed description are read and understood.

### BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in any improper way. In the drawings:
FIG. 1 is a schematic diagram of the realization of network slices in the related art;
FIG. 2 is a schematic diagram of an architecture for communication between network elements in the related art;
FIG. 3 is a schematic diagram of an architecture for realizing communication between network functions according to an embodiment of the present invention;
FIG. 4 is a flowchart of realizing an interface function registration according to an embodiment of the present invention;
FIG. 5 is a flowchart of binding a network function and an interface function according to an embodiment of the present invention;
FIG. 6 is a flowchart of realizing communication between network functions in a same communication domain according to an embodiment of the present invention;
FIG. 7 is a flowchart of realizing communication between network functions in different communication domains according to an embodiment of the present invention;
FIG. 8 is a flowchart of realizing communication between a network function and a traditional network element according to an embodiment of the present invention;
FIG. 9 is a structural diagram of an apparatus for realizing communication between network functions according to an embodiment of the present invention;
FIG. 10 is a structural diagram of another apparatus for realizing communication between network functions according to an embodiment of the present invention; and
FIG. 11 is a structural diagram of a third apparatus for realizing communication between network functions according to an embodiment of the present invention.

### DETAILED DESCRIPTION

The present invention will be described in detail with reference to the drawings and in conjunction with the embodiments. It is to be noted that if not in collision, the embodiments and features thereof in the present invention may be combined with each other.

FIG. 2 is a schematic diagram of an architecture for communication between network elements in the related art. As shown in FIG. 2, a network element in the related art includes a network element logic section inside the network and an interface section. Therefore, to realize the communication between two network elements, at first, an interface between the two network elements needs to be standardized. That is, the two network elements need to realize a standard interface to interwork with each other. Next, the interface and the network logic are combined together, which means that when upgrading network element logic functions, the whole network element cannot communicate with other network elements in a short time and cannot provide services for users. Moreover, the network element logic needs to be tightly coupled to the interface. However, the processing of traditional interfaces is a very complex part in a communication process. When a protocol version supported by a communication partner is different from the protocol version supported by the network element itself, the network element logic becomes extremely complicate, which undoubtedly increases the development and deployment difficulties of the network elements.

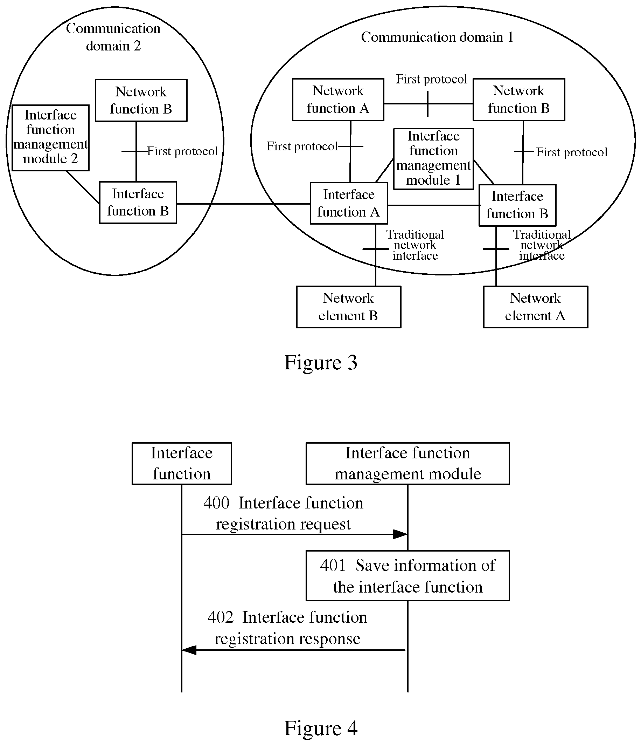

FIG. 3 is a schematic diagram of an architecture for realizing communication between network functions according to an embodiment of the present invention. As shown in FIG. 3, the concept of a communication domain is defined in the present embodiment. For example, the communication domain is constituted in a data center. Network functions and interface functions in one communication domain use the same address encoding and addressing mode, thereby may directly communicate with each other. In each communication domain, the architecture at least includes one or more network functions, one or more interface functions and an interface function management module.

The network function is configured to handle its own information processing and perform information interaction with other network functions.

After the network function is instantiated, that is, after the network function is actually deployed into the network and bound to one or more interface functions, the network function has the capability of communicating with other network functions. In this way, the network functions in each communication domain may directly interwork with each other without a protocol conversion of the interface function. The network functions in different communication domains may realize the interworking by bound interface functions. The network functions in the communication domain may be the network functions coming from one manufacturer or different manufacturers. In the architecture for realizing communication between network functions provided by the present invention, since the network functions do not need to pay attention to interfaces supported by other network functions, the design of the network functions is simplified.

The interface function is configured to provide interworking with different communication domains. Optionally, the interface function is used for supporting a traditional network interface to process the interworking with a traditional network.

Specifically, in the same communication domain, an interworking interface (that is, a communication protocol) adopted between an interface function and a network function, and is identical to an interworking interfaces between different network functions in the communication domain. As shown in FIG. 3, in a communication domain 1, a first protocol is adopted between an interface function A and a network function A, or between an interface function B and a network function B. The first protocol is exactly the communication protocol between the network function A and the network function B in the communication domain 1. Also, the first protocol is adopted between the network function A and a network function B in a communication domain 2. In this way, using the network function A in the communication domain 1 as an example, from perspective of the network function A, the communication between the network function A and the network function B in the communication domain 1 may be completed by supporting only one communication protocol, such as the first protocol, and the interworking between the network function A and the network function B in the communication domain 2 may be realized via interface functions in different interface domains with the same interface protocol, which simplifies the design of the network function A. Optionally, if the interface function supports the traditional network interface, then the network function A in the communication domain 1 also only needs to support one communication protocol, such as the first protocol, to complete the communication with a traditional network element, such as a network element B, which also simplifies the design of the network function A.

One communication domain may include one or more interface functions. Each interface function may support one type of interworking interface or multiple types of interworking interfaces. The interface function needs to register external address information and a supported interface function type with a Domain Name System (DNS). In this way, the traditional network may look up the interface function through the DNS. Also, the interface function and the network function are integrated together, which equals to a traditional network element supporting the network function.

It can be seen that the interface function and the network function may be decoupled in the embodiments of the present invention, which is different from the related art shown in FIG. 2, in which the network element logic needs to be tightly coupled to the interface, so that the logic of the network functions becomes simple, greatly reducing the development and deployment difficulties of the network functions.

The interface function management module is configured to accept the registration of the interface function after the interface function is instantiated, that is, the interface function is actually deployed into the network, store information corresponding to the interface function initiating a registration request. The information includes the types of the interface function such as a S1 interface, S6a interface and address information, etc. In this way, other network functions may find the interface function through the interface function management module.

With the architecture for realizing communication between network functions provided by the embodiments of the present invention, the decoupling of the network function and the interface function is realized. The network function realizes the interworking with the network function inside the communication domain as well as the interworking with the network function outside the communication domain by only one type of interworking interface, so that the logic of the network functions becomes simple, thereby simplifying the design of the network functions and greatly reducing the development and deployment difficulties of the network functions.

Based on the architecture shown in FIG. 3, the method for realizing communication between network functions in the embodiments of present invention includes:
an interface function registering with an interface function management module after being instantiated, so that the interface function management module stores information corresponding to the interface function; and
network functions in a same communication domain directly interworking with each other to realize communication, and the network function establishing communication with the network function in another communication domain via the interface function.

An interworking interface between the network function and a selected interface function which is in the same communication domain with the network function is identical to an interworking interface between the network function and a destination network function which is in the same communication domain with the network function.

The interface functions in the same communication domain support one or more types of interworking interfaces.

Optionally, if the interface function supports the traditional network interface, the method further includes that the network function establishes communication with a traditional network element through the interface function.

After the interface function completes the registration, the method in the present invention further includes steps described below.

The network function binds itself to a corresponding interface function according to a processing capability of the network function itself. The interface function saves information of the network function bound to the interface function itself.

The process in which the network functions in the same communication domain directly interwork with each other to realize communication includes the steps described below.

The network function needs to establish a session, and initiates a session establishment request to an interface function bound to the network function itself.

The interface function bound to the network function that initiates the session establishment request looks up, according to the received session establishment request and through a Domain Name System (DNS), a destination interface function corresponding to a destination network function corresponding to the session that needs to be established, and sends the session establishment request to the destination network function via the found destination interface function.

The network function initiating the session establishment request receives a session establishment response returned by the destination network function via the destination interface function and the interface function, or receives the session establishment response returned by the destination network function.

In this way, the communication between the network functions in the same communication domain is realized.

The step in which the network function establishes communication with the network function or a traditional network element in another communication domain through an interface function includes the steps described below.

The network function needs to establish a session, and initiates a session establishment request to the interface function bound to the network function itself.

The interface function bound to the network function initiating the session establishment request looks up, according to the received session establishment request and through the DNS, the destination interface function or the traditional network element corresponding to the destination network function in other communication domains, and sends the session establishment request to the destination network function via the found destination interface function or directly sends the session establishment request to the traditional network element.

The network function initiating the session establishment request receives, a session establishment response returned by the destination network function via the destination interface function and the interface function bound to the network function initiating the session establishment request, or receives the session establishment response returned by the traditional network element via the interface function bound to the network function initiating the session establishment request.

In this way, the communication between the network functions in different communication domains and the communication between the network function and the traditional network element are realized.

The method in the present invention will be described below in detail in conjunction with specific embodiments.

FIG. 4 is a flowchart of an embodiment for realizing an interface function registration according to an embodiment of the present invention. As shown in FIG. 4, after the interface function is instantiated, the interface function registration includes the following steps.

In step 400, the interface function sends a registration request to an interface function management module to realize registration.

The address of the interface function management module may be statically configured or obtained by querying the DNS.

In this step, a registration request message carries an interface function type, a processing capability, a routable address identifier in at least one communication domain of the interface function initiating the registration request, and the like.

In step 401, the interface function management module saves information corresponding to the interface function initiating the registration request, that is, the information carried in the registration request.

In step 402, the interface function management module returns a registration response to the interface function initiating the registration request.

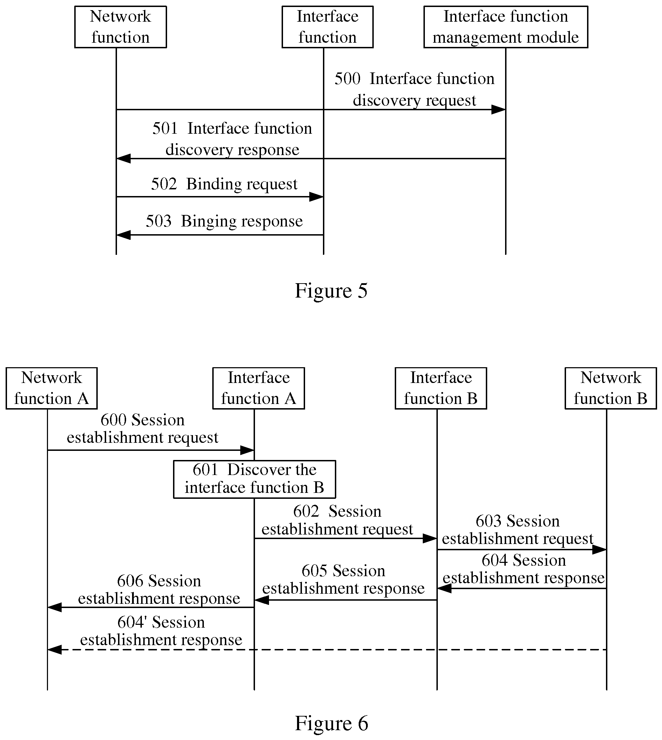

FIG. 5 is a flowchart of an embodiment for realizing a binding of a network function and an interface function according to an embodiment of the present invention. As shown in FIG. 5, after the network function is instantiated, the process of binding of a network function and an interface function includes following steps.

In step 500, the network function initiates, according to processing functions supported by the network function itself, an interface function discovery request to the interface function management module.

The address of the interface function management module may be statically configured or obtained by querying the DNS.

In this step, the interface function discovery request carries a requested interface function type.

In step 501, the interface function management module looks up, according to the interface function type, an available interface function from information of the interface functions stored by the interface function management module itself, and returns an interface function discovery response to the network function, where the routable address identifier in the communication domain to which the interface function belongs is carried in the interface function discovery response.

It is to be noted that if there are two or more available interface functions, one available interface function may be selected randomly, or may be selected according to the processing capability of the interface function from the two or more available interface functions to realize a load sharing. The specific realization described here is merely an example, and is not intended to limit the protection scope of the present invention.

In step 502, the network function initiates, according to the address identifier carried in the interface function discovery response, a binding request to a corresponding interface function.

The binding request carries the functional type of the network function, the routable address identifier in the communication domain to which the network function belongs, the processing capability, the processed user type and other auxiliary information of the network function.

In step 503, the interface function saves information of the network function initiating the binding request, and returns a binding response to the network function.

It is to be noted that if a certain network function, such as the network function A as shown in FIG. 3, needs to communicate with multiple network functions via multiple interface functions, then each interface needs to be bound to one interface function, while each type interface may be bound to different interface functions according to actual situations.

FIG. 6 is a flowchart of an embodiment for realizing communication between network functions in the same communication domain in the present invention. In this embodiment, it is assumed that a network function A is bound to an interface function A, and a network function B is bound to an interface function B, as shown in FIG. 3. As shown in FIG. 6, the communication process includes the following steps.

In step 600, the network function A sends a session establishment request to the interface function A bound to the network function A itself. The session establishment request carries relevant information of requesting to establish a session, such as a user identifier and a requested Access Point Name (APN).

In this step, the sending of the session establishment request is the same as the process of the network function A directly sending the session establishment request to the network function B.

In step 601, the interface function looks up, according to the received session establishment request, a corresponding interface function B through a DNS.

For example, in conjunction with FIG. 3, it is assumed that the network function A is a mobility management function entity, the network function B requested by the network function A to establish the session is a serving gateway, the network function A initiates the session establishment request to the bound interface function A. In this embodiment, it is assumed that the interface function A looks up, according to the user identifier and the requested APN carried in the session establishment request and through the DNS, address information of the interface function B corresponding to a destination network function B in the communication domain.

In step 602, the interface function A forwards the session establishment request to the interface function B.

Here, if a protocol supported by the interface function B is the same as a protocol supported by the interface function A, then it is unnecessary to perform a protocol conversion, and the interface function A directly forwards the received session establishment request. If the protocol supported by the interface function B is different form the protocol supported by the interface function A, the interface function A needs to perform the protocol conversion on the session establishment request, and then forwards the session establishment request.

In step 603, the interface function B performs the protocol conversion as required, that is, converts the received session establishment request to a message in the communication domain to which the interface function B belongs. The interface function B selects a suitable network function B, and then sends the session establishment request to the network function B. Optionally, the session establishment request transmitted to the network function B also carries address information of the network function A.

In this step, the interface function B may be bound to two or more network functions B, so it is necessary to select a suitable one from the two or more network functions B. The suitable one, for example, is selected based on the processing capability or selected randomly.

Optionally, when the interface function B selects the network function B, the processing capability of the network function B may be considered to realize a load sharing of multiple network functions B. Specifically speaking, since the network function B sends its own processing capability to the interface function bound to the network function B when the network function B is bound to the interface function, the interface function may perform a message distribution according to the processing capability to realize the load sharing of the network functions.

After the session is created, the network function B may return a session establishment response to the network function A in a manner of steps 604 to 606, or the step 604'.

In steps 604 to 606, the network function B returns the session establishment response to the interface function B, the interface function B sends the session establishment response to the interface function A, and the interface function A returns the session establishment response to the network function A. In this way, the network function A, the interface function A, the interface function B and the network function B all set up relevant session information.

Alternatively, in step 604', if the session establishment request sent by the interface function B in the step 603 to the network function B carries the address information of the network function A, the network function B may directly return the session establishment response to the network function A. In this way, the session is established between the network function A and network function B, the network function A may directly communicate with the network function B subsequently without the interface function A and the interface function B

Interface functions in the same communication domain, such as the interface function A and the interface function B in FIG. 3, may be deployed together, or be arranged independently and separately.

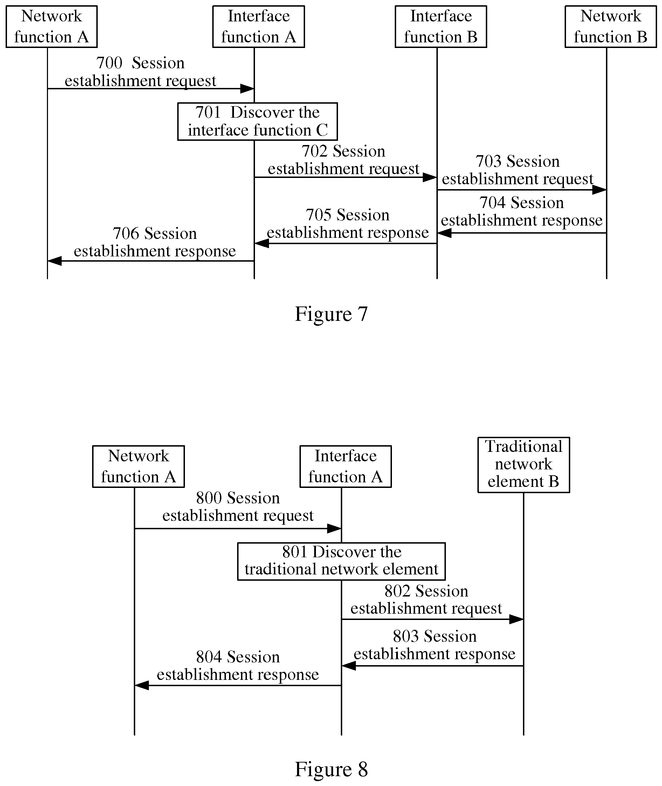

FIG. 7 is a flowchart of communication between network functions in different communication domains according to an embodiment of the present invention. In this embodiment, it is assumed that a network function A is bound to an interface function A, and a network function B is bound to an interface function B, as shown in FIG. 3. In this embodiment, the network function A and the interface function A are located in a communication domain 1, while the network function B and the interface function B are located in a communication domain 2. As shown in Figure 7, the communication process includes the following steps.

In step 700, the network function A sends a session establishment request to the interface function A bound to the network function A. The session establishment request carries relevant information for requesting session establishment, such as a user identifier and a requested Access Point Name (APN).

In this step, the sending of the session establishment request is the same as the process that the network function A directly sends the session establishment request to the network function B.

In step 701, the interface function A looks up, according to the received session establishment request and through the DNS, the corresponding interface function B.

For example, as shown in FIG. 3, assuming that the network function A is a mobility management function entity, the network function B requested by the network function A to set up the session is a serving gateway, the network function A initiates the session establishment request to the interface function A bound to the network function A. In this embodiment, it is assumed that the interface function A queries, according to the user identifier and the requested APN carried in the session establishment request, the DNS to find the interface function B corresponding to the network function B in the communication domain 2 and a communication protocol supported by the interface function B.

In step 702, the interface function A forwards the session establishment request to the interface function B in the communication domain 2.

Here, according to the situation of the protocol supported by the interface function B, the interface function A may perform a protocol conversion on the session establishment request.

In step 703, the interface function B selects a suitable network function B, then sends the session establishment request to the network function C.

Similarly, in this step, two or more network functions B may be bound to the interface function B. Therefore, it is necessary to select the suitable network function B, for example, select the suitable network function B based on the processing capability or randomly select the suitable network function B.

Optionally, when the interface function B selects the network function B, the processing capability of the network function B may also be considered to realize a load sharing of multiple network functions B.

In steps 704 to 706, the network function B returns the session establishment response to the interface function B, the interface function B sends the session establishment response to the interface function A, and the interface function A returns the session establishment response to the network function A. In this way, the network function A, the interface function A, the interface function C and the network function C all set up relevant session information.

FIG. 8 is a flowchart of realizing communication between a network function and a traditional network element according to an embodiment of the present invention. In this embodiment, in conjunction with FIG. 3, it is assumed that a network function A is bound to an interface function A, and the interface function A supports the traditional network interface. As shown in FIG. 8, the communication process includes the following steps.

In step 800, the network function A sends a session establishment request to the interface function A bound to the network function A itself. The session establishment request carries relevant information for requesting a session establishment, such as a user identifier and a requested Access Point Name (APN).

In this step, the sending of the session establishment request is the same as the process that the network function A directly sends the session establishment request to the network function B.

In step 801, the interface function A looks up, according to a received session establishment request and through the DNS, address information of the traditional network element B.

For example, as shown in FIG. 3, if the network function A is a mobility management function entity, an opposite end of the session is a serving gateway, the network function A initiates the session request to the interface function A bound thereto. In this embodiment, it is assumed that the interface function A queries the DNS according to the user identifier and the requested APN carried in the session establishment request to obtain address information of the traditional network element, such as network element B in FIG. 3.

In step 802, the interface function A performs a protocol conversion, and sends the session establishment request to the traditional network element B via a traditional interface.

In step 803, after performing a session processing, the traditional network element returns a session establishment response to the interface function A.

In step 804, the interface function A returns the session establishment response to the network function A. In this way, the network function A, the interface function A and the traditional network element, such as the network element B in FIG. 3, all set up relevant session information.

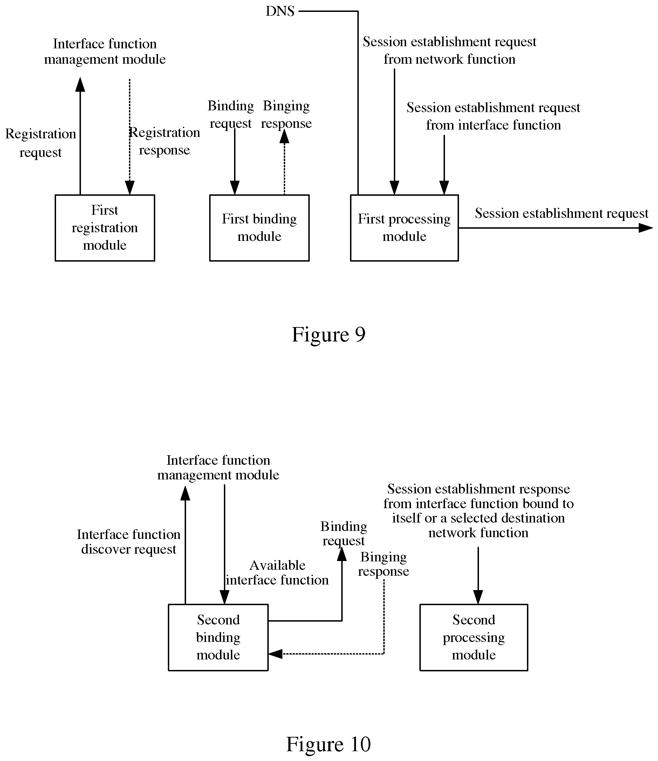

FIG. 9 is a structural diagram of an apparatus for realizing communication between network functions according to an embodiment of the present invention. As shown in FIG. 9, the apparatus at least includes a first registration module, a first binding module and a first processing module.

The first registration module is configured to request an interface function management module to register own information of the first registration module so that the interface function management module saves the information of the first registration module.

The first binding module is configured to receive a binding request from the network function, and save information of the network function initiating the binding request to realize a binding to the network function.

The first processing module is used for looking up, according to a received session establishment request from the network function and through a domain name system (DNS), a destination interface function or a destination traditional network element corresponding to a session required to be set up, and sending a session establishment request to a corresponding destination network function via the found destination interface function or directly sending the session establishment request to the destination traditional network element.

Optionally,
the first registration module is further configured to receive a registration response from the interface function management module.

Optionally,
the first binding module is further configured to return the binding response to the network function initiating the binding request.

Optionally,
the first processing module is further configured to receive a session establishment response returned by the destination network function via the destination interface function, or receive the session establishment response returned by the destination network function, or receive the session establishment response returned by the traditional network element.

Optionally,
the first processing module is further configured to receive the session establishment request from the interface function bound to the network function initiating the session establishment request, select a suitable destination network function and send the session establishment request to the selected destination network function. Further,
the first processing module is further configured to consider load of the network function to realize a load sharing of multiple network functions when selecting the suitable network function.

Optionally, the first processing module is further configured to make the session establishment request sent to the selected network function carry address information of the network function initiating the session establishment request.

The apparatus shown in FIG. 9 may be disposed in the interface function.

FIG. 10 is a structural diagram of another apparatus for realizing communication between network functions according to an embodiment of the present invention. As shown in FIG. 10, the apparatus at least includes a second binding module and a second processing module.

The second binding module is configured to request an interface function management module, according to a protocol supported by the apparatus itself, to discover an interface function, and obtain an available interface function; and initiate a binding request to the obtained interface function to realize the binding to the interface function.

The second processing module is configured to initiate a session establishment request to the interface function bound to the apparatus itself when the apparatus needs to establish a session, receive a session establishment response from the interface function bound to the apparatus itself, or the session establishment response from the selected network function.

Optionally,
the second binding module is further configured to receive a binding response from the interface function.

The apparatus shown in FIG. 10 may be disposed in the network function.

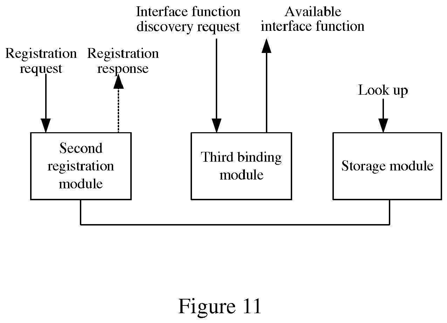

FIG. 11 is a structural diagram of a third apparatus for realizing communication between network functions according to an embodiment of the present invention. As shown in FIG. 11, the apparatus at least includes a second registration module, a third binding module and a storage module.

The second registration module is configured to receive a registration request from an interface function, and save information corresponding to the interface function initiating the registration request into the storage module.

The third binding module is configured to receive an interface function discovery request from the network function, and look up, according to an interface function type carried in the interface function discovery request, an available interface function, and return the available interface function to the network function initiating the interface function discovery request.

The storage module is configured to store the information corresponding to the interface function initiating the registration request.

Optionally,
the second registration module is further configured to return a registration response to the interface function initiating the registrations request.

The apparatus shown in FIG. 11 may be disposed in an interface function management module.

The above are merely preferred embodiments of the present invention and are not intended to limit the protection scope of the present invention. Any modifications, equivalent substitutions, improvements and the like made within the spirit and principle of the present invention are within the scope of the present invention.

It is understandable by those skilled in the art that all or some steps in the method described above may be completed by relevant hardware (such as a processor) as instructed by programs, and the programs may be stored in a computer-readable storage medium, such as a read-only memory, a magnetic disk and an optical disk. Optionally, all or part of the steps in the embodiments described above may also be implemented by using one or more integrated circuits. Accordingly, each module/unit in the embodiments described above may be implemented by hardware, for example, the functions of these modules/units may be implemented by integrated circuits; or may be implemented by software function modules, for example, the functions of these modules/units may be implemented by using a processor to execute programs/instructions stored in a storage medium. The present invention is not limited to any specific combination of hardware and software.

Although the embodiments disclosed by the present invention are as described above, the content thereof is merely embodiments for facilitating the understanding of the present invention and is not intended to limit the present invention. Any person skilled in the art to which the present invention pertains may make any modifications and changes in the forms and details of the implementation without departing from the spirit and range disclosed by the present invention, but the patent protection scope of the present invention is still subject to the scope defined by the appended claims.

### INDUSTRIAL APPLICABILITY

An architecture, method and apparatus for realizing communication between network functions provided in the embodiments of the present invention includes: an interface function registering with an interface function management module after being instantiated, so that the interface function management module stores information corresponding to the interface function; and network functions in a same communication domain directly interworking with each other to realize communication, and the network function establishing communication with the network function in another communication domain via the interface function. An interworking interface between the network function and a selected interface function which is in the same communication domain with the network function is identical to an interworking interface between the network function and a destination network function which is in the same communication domain with the network function. With the architecture for realizing network function communication provided by the embodiments, the network function and the interface function are decoupled. The network function can realize the interworking with the destination network function inside the communication domain as well as the interworking with the destination network function outside the communication domain by using only one type of interworking interface, so that the logic of the network functions becomes simple, thereby simplifying the design of the network functions and greatly reducing the development and deployment difficulties of the network functions.

## Claims

1. An architecture for realizing communication between network functions, in each communication domain, at least comprising: one or more network functions, one or more interface functions and an interface function management module; wherein
each network function is configured to handle its own information processing and perform information interactions with other network functions;
each interface function is configured to provide interworking with a different communication domain;
the interface function management module is configured to accept a registration from the interface function, and store information corresponding to the interface function initiating a registration request; and
an interworking interface between the network function and a selected interface function which is in the same communication domain with the network function is identical to an interworking interface between the network function and a destination network function which is in the same communication domain with the network function.

2. The architecture according to claim 1, wherein the interface function supports a traditional network interface, and is further configured to handle interworking with a traditional network.

3. A method for realizing network function communication, comprising:
an interface function registering with an interface function management module after being instantiated, so that the interface function management module stores information corresponding to the interface function; and
directly interworking with each other, by network functions in a same communication domain, to realize communication, and establishing, by the network function, communication with the network function in another communication domain via the interface function,
wherein an interworking interface between the network function and a selected interface function which is in the same communication domain with the network function is identical to an interworking interface between the network function and a destination network function which is in the same communication domain with the network function.

4. The method according to claim 3, wherein the interface function supports a traditional network interface, the method further comprises: establishing, by the network function, communication with a traditional network element by the interface functions.

5. The method according to claim 3, after the registering of the interface function is completed, further comprising: according to a processing capability of the network function itself, binding, by the network function, a corresponding interface function with the network function itself, wherein the interface function stores information of the network function bound to the interface function itself.

6. The method according to claim 3, wherein directly interworking with each other, by the network functions in a same communication domain, to realize the communication comprises:
when the network function needs to establish a session, initiating, by the network function, a session establishment request to an interface function bound to the network function itself;
the interface function bound to the network function looking up, according to the received session establishment request and through a Domain Name System, DNS, a destination interface function corresponding to a destination network function corresponding to the session that needs to be established, and sending the session establishment request to the destination network function via the found destination interface function; and
the network function that initiates the session establishment request receiving a session establishment response returned by the destination network function via the destination interface function and the interface function, or receiving the session establishment response returned by the destination network function, and establishing a direct interworking with the destination network function.

7. The method according to claim 3 or claim 4, wherein establishing, by the network function, the communication with the network function in another communication domain or the traditional network element via the interface function comprises:
when the network function needs to establish a session, the network function initiating a session establishment request to an interface function bound to the network function itself;
the interface function bound to the network function looking up, according to the received session establishment request and through a DNS, a destination interface function corresponding to a destination network function in another communication domain or a traditional network element, and sending the session establishment request to the destination network function via the found destination interface function or directly sending the session establishment request to the traditional network element; and
the network function receiving a session establishment response returned by the destination network function via the interface function bound to the network function and the destination interface function, or receiving the session establishment response returned by the traditional network element via the interface function bound to the network function.

8. An apparatus for realizing communication between network functions, comprising a first registration module, a first binding module and a first processing module; wherein
the first registration module is configured to request an interface function management module for registering information of the first registration module, so that the interface function management module stores the information of the first registration module;
the first binding module is configured to receive a binding request from the network function, and store information of the network function initiating the binding request to realize a binding to the network function; and
the first processing module is configured to look up, according to a received session establishment request from the network function and through a DNS, a destination interface function or a destination traditional network element corresponding to a session that needs to be established, and send the session establishment request to a corresponding destination network function via the found destination interface function or directly send the session establishment request to the destination traditional network element.

9. The apparatus according to claim 8, the first processing module is further configured to receive a session establishment response returned by the destination network function via the destination interface function, or receive the session establishment response returned by the destination network function, or receive the session establishment response returned by the traditional network element.

10. The apparatus according to claim 8, the first processing module is further configured to receive the session establishment request of the interface function bound to the network function initiating the session establishment request, select a suitable destination network function and send the session establishment request to the selected destination network function.

11. The apparatus according to claim 10, the first processing module is further configured to realize a load sharing of a plurality of network functions according to load of the plurality of network functions when selecting the suitable network function.

12. The apparatus according to claim 8, the first processing module is further configured to make the session establishment request sent to the selected destination network function carry address information of the network function initiating the session establishment request.

13. An apparatus for realizing communication between network functions, comprising a second binding module and a second processing module; wherein
the second binding module is configured to request an interface function management module, according to a protocol supported by the apparatus itself, to discover an interface function, and obtain an available interface function; and initiate a binding request to the obtained interface function to realize the binding to the interface function; and
the second processing module is configured to initiate a session establishment request to the interface function bound to the apparatus when a session needs to be established, receive a session establishment response from the interface function bound to the apparatus, or the session establishment response from a selected network function.

14. An apparatus for realizing network function communication, comprising a second registration module, a third binding module and a storage module; wherein
the second registration module is configured to receive a registration request from an interface function, and save information corresponding to the interface function initiating the registration request into the storage module;
the third binding module is configured to receive an interface function discovery request from the network function, and search, according to an interface function type carried in the interface function discovery request, for an available interface function, and return the available interface function to the network function initiating the interface function discovery request; and
the storage module is configured to store the information corresponding to the interface function initiating the registration request.

15. A computer-readable storage medium storing computer-executable instructions, wherein the computer-executable instructions are used for executing the method for realizing network function communication according to any one of claims 3 to 7.
